# EUROPEAN PATENT SPECIFICATION

(11) **EP 4 333 137 B1**
(45) Date of publication and mention of the grant of the patent: **01.07.2026**
(21) Application number: 21954532.4
(22) Date of filing: 25.08.2021
(51) Int. Cl.: H01M 50/109, H01M 50/153, H01M 50/531, H01M 50/181, H01M 50/536, H01M 50/559, H01M 50/566, H01M 50/636, H01M 10/04

(54) **BATTERY COMPRISING CONNECTION SHEETS**
BATTERIE MIT ANSCHLUSSPLATTEN
BATTERIE COMPRENANT DES PLAQUES DE CONNEXION

(43) Date of publication of application: 06.03.2024
(73) Proprietor: Zhuhai CosMX Battery Co., Ltd., Zhuhai, Guangdong 519180 (CN)
(72) Inventor: LIN, Hongkai, Zhuhai, Guangdong 519180 (CN); ZENG, Yuxiang, Zhuhai, Guangdong 519180 (CN); WANG, Yongwang, Zhuhai, Guangdong 519180 (CN); XU, Desheng, Zhuhai, Guangdong 519180 (CN); CHEN, Longyun, Zhuhai, Guangdong 519180 (CN)
(74) Representative: PPR AG
(86) International application number: PCT/CN2021/114620
(87) International publication number: WO 2023/023996

(56) References cited:
- WO-A1-2021/135163
- CN-A- 111 477 775
- CN-A- 111 477 791
- CN-A- 111 613 739
- CN-A- 111 613 739
- CN-A- 112 531 242
- CN-U- 201 910 454
- CN-U- 203 983 388
- CN-U- 212 257 478
- JP-U- S62 167 367
- US-A1- 2020 020 940

## Description

### TECHNICAL FIELD

The present application relates to a battery, belonging to the field of batteries.

### BACKGROUND

Batteries are a common electrochemical energy storage device widely used in electronic products and other fields. For example, button batteries are often used in wearable electronic products. With the development of wearable electronic products, an increasing requirement has been put forward for the stability and other performance of the button batteries. Battery pack generally refers to the packaging, encapsulation, and assembly of a battery, which is an indispensable part of the battery and an important factor affecting its stability and other performance. Specifically, a battery has a battery cell and a pack structure for packaging the battery cell. The battery cell includes a stacked positive electrode sheet, a separator, a negative electrode sheet, a positive electrode tab connected to the positive electrode sheet, and a negative electrode tab connected to the negative electrode sheet, the pack structure is provided with a positive adapter (positive pin) and a negative adapter (negative pin). The positive pin is electrically connected to the positive electrode tab, the negative pin is electrically connected to the negative electrode tab, thereby achieving that the positive pin and negative pin serve as wires for connecting the internal circuit of the battery to peripheral circuit. However, the current battery pack structure is not conducive to, for example, the stability of the battery. For example, the common positive pin and negative pin are wires connected with the positive electrode tab and the negative electrode tab, respectively, and thus there are such defects that, for example, the positive pin and the negative pin in the battery pack structure cannot be firmly set, which affect the stability and other performance of the battery.

CN111477791A discloses a button battery, which comprises a battery upper shell, a battery bottom shell and a battery inner core, wherein the battery inner core is accommodated in the battery upper shell, the battery upper shell is buckled on the battery bottom shell, the battery upper shell comprises a negative electrode steel sheet and an insulating ring body, and the insulating ring body is arranged on the negative electrode steel sheet. And the upper battery shell is changed into the combination of the plastic side edge and the negative electrode steel sheet, and compared with the existing button battery, the process operation of injection molding on the side wall of the shell can be omitted, so that the effects of easiness in assembly, assembly step saving and insulativity improvement can be effectively realized.

WO2021135163A1 discloses an energy storage device, which comprises a device main body; an electrical connection member; and an insulation component. The device main body has a positive electrode region and a negative electrode region insulated from each other. A portion of the electrical connection member is connected to the positive electrode region or the negative electrode region, and another portion thereof extends outwards from the device main body. The insulation component is provided at the electrical connection member and/or the device main body. The insulation component is configured to prevent occurrence of a short circuit in the device.

CN212257478U discloses a button cell which comprises a steel shell, a cell assembly and a steel sheet assembly, and the steel shell is provided with an insulating avoidance gap; the battery cellassembly comprises a soft package battery cell, a first tab and a second tab, the first tab and the second tab are respectively arranged on the soft package battery cell, and the first tab is welded on the steel shell; and the steel sheet assembly comprises a first steel sheet and a second steel sheet, the first steel sheet is welded on the steel shell, the second tab is welded on the second steelsheet, the second steel sheet is aligned with the insulating avoidance gap, and one end of the first steel sheet and one end of the second steel sheet are used for being inserted into an external electronic device together.

JPS62167367 discloses a button cell, comprising a tab having different portions connected together.

### SUMMARY

The present invention is set out in the appended set of claims. The present application provides a battery with good stability and other performance, which can effectively overcome the shortcomings in existing technology.

The present application provides a battery including a shell, a top cover, a battery cell, and a second adapter part, where the top cover seals an upper end of the shell and forms a cavity together with the shell, the battery cell is located within the cavity, the shell includes a side wall surrounding the cavity and a bottom shell arranged at a lower end of the side wall, the battery cell has a first tab and a second tab, and the first tab and the second tab have opposite polarities, where the bottom shell is electrically connected to the second tab, and the second adapter part includes a second connection sheet and a second pin, the second adapter part is connected to the bottom shell through the second connection sheet; one end of the second pin is connected to the second connection sheet, and the other end of the second pin extends out of an outer edge of the bottom shell.

According to the invention, the second connection sheet includes a third connection portion, a fourth connection portion, and a transition portion connected between the third connection portion and the fourth connection portion, where the third connection portion is welded to the bottom shell, a top surface of the fourth connection portion is higher than that of the third connection portion, and/or a bottom surface of the fourth connection portion is higher than that of the third connection portion.

According to the invention, the bottom shell is further provided with a second insulation layer, and the fourth connection portion is connected to the bottom shell through the second insulation layer.

According to an implementation mode of the present application, the top cover includes a first metal sheet, a first insulation sheet and a second metal sheet, where the first metal sheet is connected to the upper end of the shell to achieve the top cover sealing the upper end of the shell, the second metal sheet is insulatively connected to the first metal sheet through the first insulation sheet; the top cover is provided with a through hole that runs through the first metal sheet and the first insulation sheet , the through hole is communicated with the cavity, the second metal sheet includes a first connection portion and a second connection portion connected to the first connection portion, the first connection portion is connected to the first insulation sheet, and the second connection portion is provided at the through hole and seals the through hole; the battery further includes a first adapter part, the first adapter part includes a first connection sheet and a first pin, one end of the first pin is connected to the first connection sheet, and the other end of the first pin extends out of an outer edge of the top cover; the second connection portion is electrically connected to the first tab, and the first adapter part is connected to the second connection portion through the first connection sheet.

According to an implementation mode of the present application, an outer peripheral edge of the first metal sheet is welded to an upper end of the side wall to achieve the top cover sealing the upper end of the shell.

According to an implementation mode of the present application, the first connection sheet is welded to the second connection portion, and a first welded mark generated by the welding runs through the first connection sheet and extends to 1/3 to 2/3 of thickness of the second connection portion.

According to an implementation mode of the present application, the first adapter part is located on a side of the second metal sheet away from the cavity.

According to an implementation mode of the present application, the second connection portion is provided with a liquid injection hole communicated with the cavity and a sealing piece for sealing the liquid injection hole, the sealing piece is located on a side of the second connection portion away from the cavity, and the sealing piece is electrically connected to the first tab through the second connection portion, and the first connection sheet is welded to the sealing piece.

According to an implementation mode of the present application, the first welded mark generated by the welding runs through the first connection sheet and extends to 1/3 to 2/3 of thickness of the sealing piece.

According to an implementation mode of the present application, a surface of the sealing piece away from the cavity is no higher than a surface of the first connection portion away from the cavity.

According to an implementation mode of the present application, the side wall of the shell is provided with a first insulation layer, and at least one of the following features is met: a part where the other end of the first pin extends out of the outer edge of the top cover is the first adapter, the first pin further includes a first extension portion extending to the side wall of the shell, one end of the first extension portion is connected to the first connection sheet, and the other end of the first extension portion is connected to the first adapter, the first extension portion is insulated from the side wall through the first insulation layer; a part where the other end of the second pin extending out of the outer edge of the bottom shell is the second adapter, the second pin further includes a second extension portion extending to the side wall of the shell, one end of the second extension portion is connected to the second connection sheet, and the other end of the second extension portion is connected to the second adapter, the second extension portion is connected to the side wall of the shell through the first insulation layer.

According to an implementation mode of the present application, the second pin includes a positioning pin and a conductive pin, and in a direction from the bottom shell to the top cover, a distance from the second adapter of the positioning pin to the top cover is greater than or equal to a distance from the second adapter of the conductive pin to the top cover, and/or, the distance from the second adapter of the positioning pin to the top cover is greater than or equal to a distance from the first adapter of the first pin to the top cover.

According to an implementation mode of the present application, the second pin includes a positioning pin and a conductive pin, and in a projection of the battery perpendicular to a direction from the bottom shell to the top cover, the positioning pin is located between the conductive pin and the first pin.

According to an implementation mode of the present application, the second connection sheet includes a third connection portion, a fourth connection portion, and a transition portion connected between the third connection portion and the fourth connection portion; where the third connection portion is welded to the bottom shell; a top surface of the fourth connection portion is higher than a top surface of the third connection portion, and/or a bottom surface of the fourth connection portion is higher than a bottom surface of the third connection portion; a part where the other end of the first pin extending out of the outer edge of the top cover is the first adapter, and a part where the other end of the second pin extends out of the outer edge of the bottom shell is the second adapter; the second pin includes a conductive pin and a positioning pin, in a projection of the shell perpendicular to a direction from the bottom shell to the top cover, the second adapter of the positioning pin is located between the first adapter of the first pin and the second adapter of the conductive pin, and an included angle between a first connection line and a second connection line is α, with α > 30 °, where the first connection line is a straight line passing through a center point of an orthographic projection of the top cover and bisecting the transition portion, and the second connection line is a straight line passing through the center point of the orthographic projection of the top cover and bisecting the second adapter of the positioning pin.

According to an implementation mode of the present application, the second pin is arranged on the fourth connection portion.

According to an implementation mode of the present application, a second welded mark generated by welding runs through the third connection portion and extends to 1/3 to 2/3 of thickness of the bottom shell.

According to an implementation mode of the present application, 60 ° ≤ α≤ 140 °.

According to an implementation mode of present application, 100 ° ≤ α≤ 125 °.

According to an implementation mode of the present application, the second insulation layer has a thickness of 0.05mm-0. 1mm.

According to an implementation mode of the present application, a cross section of the second connection sheet perpendicular to a thickness direction of the second connection sheet is an incomplete semi-circular ring with an opening.

According to an implementation mode of the present application, an outer edge of the second connection sheet is in a shape of arc, and the arc is basically concentric with the outer edge of the shell.

According to an implementation mode of the present application, the second adapter part is located on a side of the bottom shell away from the cavity.

According to an implementation mode of the present application, a second insulation sheet arranged at a side of the top cover away from the cavity is further included in the battery, and an orthographic projection of the second insulation sheet in a direction perpendicular to a thickness of the top cover covers an orthographic projection of the top cover in a direction perpendicular to the thickness of the top cover.

According to an implementation mode of the present application, the first tab is a positive electrode tab, and the second tab is a negative electrode tab.

According to an embodiment of the present application, the battery is a button battery.

In the present application, the second adapter is arranged on a bottom shell of the battery pack structure through a second connection sheet, and electrically connected to the second tab through the shell, the second pin of the second adapter part extends out of an outer edge of the bottom shell, can serve as a connector connecting with a peripheral circuit and also play a positioning role, which is conducive to improving a stability of the battery after it is assembled in an electronic product and can ensure the stability of an electrical connection between the second adapter part and the second tab, so as to avoid an occurrence of such as breakage of the first adapter part and second adapter part from the battery pack structure, thereby ensuring the stability and other performance of the battery and ensuring functional performance of the battery.

### BRIEF DESCRIPTION OF DRAWINGS

FIG. 1 is a structural schematic diagram of a battery according to an implementation mode of the present application.
FIG. 2 is a bottom view of structure of a battery according to an implementation mode of the present application.
FIG. 3 is a schematic diagram of an orthographic projection of a bottom shell of a battery in a direction perpendicular to its thickness direction according to an implementation mode of the present application.
FIG. 4 is a top view of structure of a battery according to an implementation mode of the present application.
FIG. 5 is a cross section view of structure of a battery according to an implementation mode of the present application.
FIG. 6 is an exploded view of a battery according to an implementation mode of the present application.

Reference numbers: 1: shell; 2: top cover; 3: first adapter part; 4: second adapter part; 5: sealing piece; 6: cavity; 7: second insulation sheet; 8: straight portion; 9: battery cell; 11: first insulation layer; 12: second insulation layer; 13: third insulation layer; 14: fourth insulation layer; 15: bottom shell; 21: first metal sheet; 22: second metal sheet; 23: first insulation sheet; 31: first adapter; 32: first extension portion; 33: horizontal portion; 34: first connection sheet; 41, 41': second adapter; 42, 42': second extension portion; 43: third connection portion; 44: fourth connection portion; 45: transition portion; 221: first connection portion; 222: second connection portion; α: included angle.

### DESCRIPTION OF EMBODIMENTS

In order to enable technical person in this field to better understand the solution of the present application, further detailed explanations will be provided below. In the description of the present application, terms "arrangement", "connection to", "connection with", and "communicated with" should be broadly understood unless otherwise specified and limited, for example, it can be a fixed connection, a detachable connection, or an integrated connection; it can be a mechanical connection or an electrical connection; it can be a direct connection, an indirect connection through an intermediate medium, or an intercommunication between two components. For ordinary technical person in this field, the specific meanings of the above terms in the present application can be understood according to specific circumstances. In addition, terms "first", "second", "third", and "fourth" are only used for descriptive purposes, such as distinguishing between components to better illustrate/explain the technical solutions, and cannot be understood as indicating or implying the quantity or substantive order of the indicated technical features. Terms such as "above" and "below" for indicating the orientation are used to express the relative position relationships of the components, with a side where the top cover is located as the top, a side where the bottom shell is located as the bottom, and an outer surface of a wall of the cavity between the top cover and the bottom shell as the side surface.

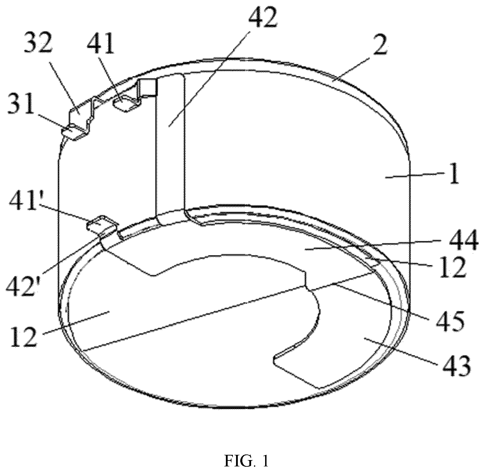

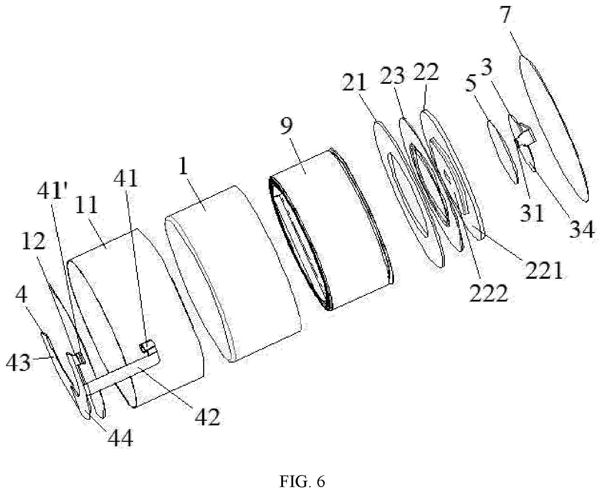

As shown in FIGs. 1 to 6, a battery of the present application includes a shell 1, a top cover 2, a battery cell, and a second adapter part 4. The top cover 2 seals an upper end of a side wall and forms a cavity 6 together with the shell 1. The battery cell 9 is located inside the cavity 6, and the shell 1 includes a side wall surrounding the cavity 6 and a bottom shell 15 arranged at a lower end of the side wall. The battery cell 9 has a first tab and a second tab, and the polarity of the first tab is opposite to that of the second tab. Where, the bottom shell is electrically connected to the second tab, the second adapter part 4 includes a second connection sheet and a second pin, and the second adapter part 4 is connected to the bottom shell through the second connection sheet; one end of the second pin is connected to the second connection sheet, and the other end of the second pin extends out of an outer edge of the bottom shell.

In general, the above-mentioned battery further includes a first adapter part 3, which includes a first connection sheet 34 and a first pin arranged on the first connection sheet 34. The first adapter part 3 is arranged on the top cover through the first connection sheet 34, one end of the first pin is connected to the first connection sheet 34, and the other end of the first pin extends out of the outer edge of the top cover.

The above top cover can be specifically formed by heat pressing and laminating two layers of metal sheets and an insulation sheet, where the insulation sheet is located between the two layers of metal sheets. In some preferred embodiments, the top cover includes a first metal sheet 21, a first insulation sheet 23, and a second metal sheet 22. The first metal sheet 21 is connected to an upper end of the shell 1 to achieve the top cover sealing the upper end of the shell 1, and the second metal sheet 22 is insulatively connected to the first metal sheet 21 through the first insulation sheet 23; the top cover is provided with a through hole that runs through the first metal sheet 21 and the first insulation sheet 23, the through hole is communicated with the cavity 6. The second metal sheet 22 includes a first connection portion 221 and a second connection portion 222 connected to the first connection portion 221. The first connection portion 221 is connected to the first insulation sheet 23, and the second connection portion 222 is located at the through hole and seals the through hole; the first adapter part 3 includes a first connection sheet 34 and a first pin arranged on the first connection sheet 34. One end of the first pin is connected to the first connection sheet 34, and the other end of the first pin extends out of the outer edge of the top cover; the second connection portion 222 is electrically connected to the first tab, and the first adapter part 3 is connected to the second connection portion 222 through the first connection sheet 34, thereby electrically connecting the first adapter part 3 to the first tab.

Specifically, the first adapter part 3 is electrically connected to the first tab and insulated from the second tab, the second adapter part 4 is electrically connected to the second tab and insulated from the first tab, the first adapter part 3 can be located on a side of the second metal sheet 22 away from the cavity 6, and the second adapter part 4 can be located on a side of the bottom shell away from the cavity 6. The first metal sheet 21, the first insulation sheet 23, and the second metal sheet 22 are sequentially arranged in layers, so that the first metal sheet 21 and the second metal sheet 22 are insulatively connected through the first insulation sheet 23. The through hole runs through the first metal sheet 21 and the first insulation sheet 23, that is, the through hole includes a first through hole that runs through the first metal sheet 21 and a second through hole that runs through the first insulation sheet 23. The first through hole and the second through hole are communicated with the cavity 6 and are basically concentric with the cavity 6. Optionally, a diameter of the first through hole is slightly larger than that of the second through hole, and a side of the first insulation sheet 23 close to the second through hole extends downwards to forms a protrusion located inside the first through hole, the protrusion is located between the first metal sheet 21 and the second connection portion 222 of the second metal sheet 22, so that the first metal sheet 21 and the second connection portion 222 are insulated through the first insulation sheet 23. At the same time, the first connection portion 221 is connected to the first metal sheet 21 through the first insulation sheet 23, that is, the first connection portion 221 is also insulated from the first metal sheet 21 through the first insulation sheet 23, thereby isolating the first metal sheet 21 from the second metal sheet 22 through the first insulation sheet 23.

In the present application, the outer peripheral edge of the top cover can be welded to the upper end of the side wall to achieve the top cover sealing the upper end of the side wall. For example, in some preferred embodiments, an outer peripheral edge of the first metal sheet 21 is welded to the upper end of the side wall to achieve the top cover sealing the upper end of the side wall. In addition, the shell 1 and the bottom shell 15 can be integrally formed, or the outer peripheral edge of the bottom shell 15 can be welded to a lower end of the shell 1. There is no specific limitation on this in the present application.

In the present application, the first connection sheet 34 can be welded to the second connection portion 222, and a first welded mark generated by the welding runs through the first connection sheet 34 and extends to 1/3 to 2/3 of thickness of the second connection portion 222, which is conducive to further improving the sealing, stability and other performance of the battery. In a specific implementation, a laser welding method can be used for welding. In a welding process, the first connection sheet 34 is laminated with the second connection portion 222, and then laser is projected onto the first connection sheet 34 for welding. A welding strength is controlled by adjusting laser welding parameters, so that the generated welded mark runs through the first connection sheet 34 and extends to 1/3 to 2/3 of thickness of the second connection portion 222, that is, a length of the welded mark generated in the second connection portion 222 in the thickness direction of the second connection portion 222 is about 1/3 to 2/3 of thickness of the second connection portion 222 (i.e., a depth of fusion of the second connection portion 222 caused by the welding is about 1/3 to 2/3 of the thickness of the second connection portion 222).

In some embodiments, the second connection portion 222 may also be provided with a liquid injection hole communicated with the cavity 6, and a sealing piece 5 for sealing the liquid injection hole. The sealing piece 5 is located on a side of the second connection portion 222 away from the cavity 6, and the sealing piece 5 is electrically connected to the first tab through the second connection portion 222. The first connection sheet 34 is welded to the sealing piece 5, a first welded mark generated by the welding runs through the first connection sheet 34 and extends to 1/3 to 2/3 of thickness of the sealing piece 5 (i.e., a depth of fusion of the sealing piece 5 caused by the welding is about 1/3 to 2/3 of the thickness of the sealing piece 5), and the liquid injection hole can be used for injection of an electrolyte, for example. Optionally, the first tab is welded to the second connection portion 222, and the sealing piece 5 is welded to the second connection portion 222.

In general, the second metal sheet 22 further includes a first connection portion 221 connected to the second connection portion 222, and a surface of the sealing piece 5 away from the cavity 6 is no higher than a surface of the first connection portion 221 away from the cavity 6. Specifically, the second metal sheet 22 is provided with a groove located above the second connection portion 222, and the groove is formed by surrounding of the first connection portion 221 (i.e., a side wall of the groove is the first connection portion 221, and a bottom of the groove is the second connection portion 222), and the sealing piece 5 is located within the groove, and a depth of the groove is such that a surface of the sealing piece 5 away from the cavity 6 is no higher than a surface of the first connection portion 221 away from the cavity 6, and preferably, the surface of the sealing piece 5 away from the cavity 6 is lower than the surface of the first connection portion 221 away from the cavity 6 (i.e., the surface of the sealing piece 5 away from the cavity 6 is located below the surface of the first connection portion 221 away from the cavity 6, thereby rendering a top surface of the battery pack structure smoother, reducing the battery volume, and further optimizing performance of the battery. The sealing piece 5 is located in the groove, and specifically, it can be welded to the second connection portion 222 at a lower part of the groove. For ease of welding, there is generally a gap between the sealing piece 5 and the side wall of the groove (i.e., the first connection portion 221). For example, a cross section of the sealing piece 5 and a cross section of the groove perpendicular to a thickness direction of the sealing piece 5 are circular, the sealing piece 5 is concentric with the groove, and an outer diameter of the sealing piece 5 is smaller than an inner diameter of the groove and in this way, there is a gap between the sealing piece 5 and the sidewall of the groove. The first metal sheet 21, the first insulation sheet 23, and the first connection portion 221 of the second metal sheet are sequentially laminated, where the second metal sheet 22 can specifically be connected to the first insulation sheet 23 through the first connection portion 221.

In the present application, the second connection portion 222 is located at the through hole, and generally runs through the through hole. A surface of the second connection portion 222 facing the cavity 6 is connected to the first tab, and a surface thereof facing away the cavity 6 is connected to the first connection sheet 34. Generally, the surface of the second connection portion 222 facing the cavity 6 is basically flush with a surface of the first metal sheet 21 facing the cavity 6 or located below the surface of the first metal sheet 21 facing the cavity 6 (i.e., being closer to the cavity 6 than the surface of the first metal sheet 21 facing the cavity 6), which facilitates a connection between the first tab and the second connection portion 222. Optionally, the first tab may include a straight portion 8 connected to the battery cell 9. A surface of the straight portion 8 perpendicular to a thickness direction of the straight portion 8 is basically parallel to a surface of the second connection portion 222 perpendicular to a thickness direction of the second connection portion 222. The straight portion 8 is welded to the second connection portion 222 to achieve a connection between the second connection portion 222 and the first tab. In addition, a third insulation layer 13 can be arranged on the surface of the first metal sheet 21 facing the cavity 6, and the third insulation layer 13 is located between the first metal sheet 21 and the straight portion 8 of the first tab, so that the first tab is insulated from the first metal sheet 21 through the third insulation layer 13.

In general, the first connection sheet 34, the sealing piece 5, the second metal sheet 22, the first insulation sheet 23, the first metal sheet 21, the liquid injection hole, the through hole, and the cavity 6 are basically concentric. Shapes of a cross section of the first connection sheet 34 perpendicular to its thickness direction and a cross section of the sealing piece 5 perpendicular to its thickness direction can be, for example, circular; shapes of a cross section of the second metal sheet 22 perpendicular to its thickness direction, a cross section of the first insulation sheet 23 perpendicular to its thickness direction and a cross section of the first metal sheet 21 perpendicular to its thickness direction can be, for example, circular; and a shape of the shell 1, for example, is cylindrical. The battery, for example, is a button battery, but it is not limited thereto. The above thickness direction is the same as a direction from the bottom shell 15 to the top cover 2 (i.e., an axial direction of the battery).

In the present application, the first adapter part 3 and the second adapter part 4 serve as wires for connecting the battery to a peripheral circuit. A part of the first adapter part 3 extending out of the outer edge of the top cover and a part of the second adapter part 4 extending out of the outer edge of the bottom shell serve as adapters (i.e., the first adapter and the second adapter described below) for connecting to the peripheral circuit, so that the battery is connected by the adapters to the peripheral circuit, for example, a circuit in an electronic product equipped with the battery.

In the present application, the first pin can be in a straight shape, that is, the first pin can be a flat structure extending outward from the first connection sheet 34. A surface of the flat structure perpendicular to its thickness direction is parallel to a surface of the first connection sheet 34 perpendicular to its thickness direction. The first pin can also be in other shape such as an L-shape. In some preferred embodiments, a first insulation layer 11 is provided on a side wall of the shell, and a part where the other end of the first pin extending out of the outer edge of the top cover is the first adapter 31, the first pin further includes a first extension portion 32 extending to the side wall of the shell; one end of the first extension portion 32 is connected to the first connection sheet 34, and the other end thereof is connected to the first adapter 31, the first extension portion 32 is insulated from the side wall through the first insulation layer 11. Such structure facilitates an assembly of the battery into an electronic product through the first adapter 31, and it not only achieves a circuit communication between the battery and the electronic product, but also facilitates positioning of the battery in the electronic product through the first adapter 31, improving a stability of the battery in the electronic product.

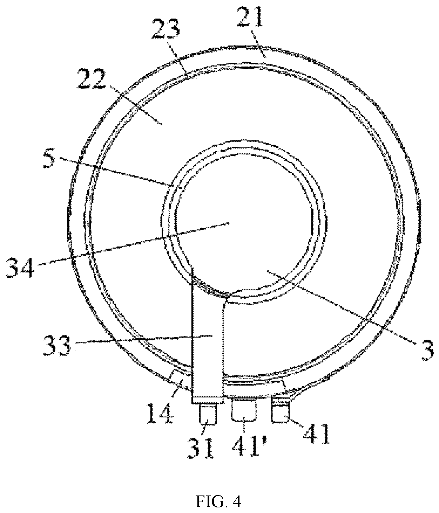

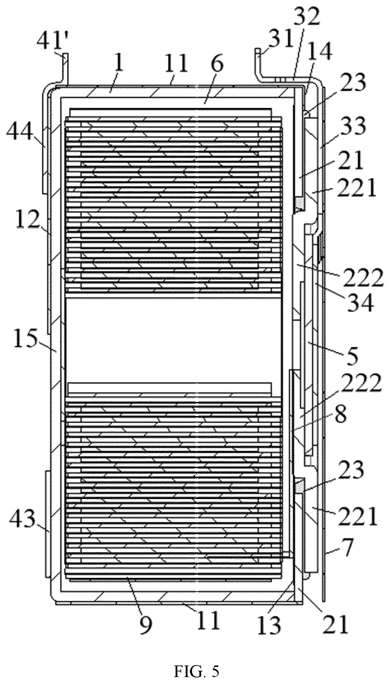

In general, an orthographic projection of the second metal sheet 22 perpendicular to an axial direction of the battery covers an orthographic projection of the first connection sheet 34 perpendicular to the axial direction of the battery, that is, the first connection sheet 34 does not exceed beyond an outer edge of the second metal sheet 22. For example, a cross section of the second metal sheet 22 perpendicular to its thickness direction is circular, a cross section of the first connection sheet 34 perpendicular to its thickness direction is circular, and the second metal sheet 22 is concentric with the first connection sheet 34, an outer diameter of the second metal sheet 22 is greater than an outer diameter of the first connection sheet 34. The first pin bends at a junction between the top cover and the side wall of the shell, extends to the side wall of the shell through the first extension portion 32, so that the first adapter 31 is located on a side surface of the shell (the surface of the side wall away from the cavity 6). Specifically, the first pin can include a horizontal portion 33, a first bending portion and the first extension portion 32; the first connection sheet 34, the horizontal portion 33, the first bending portion and the first extension portion 32 are sequentially connected. The first pin is bent at a junction between the top cover and the side wall through the first bending portion, so that the first extension portion 32 is located on the side wall of the shell 1, that is, the horizontal portion 33 is located on the top cover, and its surface is basically parallel to the surface of the first connection sheet 34. One end of the first bending portion is connected to the horizontal portion 33, and the other end thereof is connected to one end of the first extension portion 32, and the other end of the first extension portion 32 is connected to the first adapter 31 (as shown in FIGs. 4 and 5). Where, the first bending portion and the first extension portion 32 are insulated from the side wall of the shell through the first insulation layer 11, so that the first adapter part 3 is insulated from the second tab, avoiding a short circuit and other phenomenon.

Optionally, the first adapter 31 can be in a form of sheet, and an included angle between a plane where a surface of the first adapter 31 perpendicular to the thickness direction of the first adapter 31 is located and an axial direction of the battery is less than or equal to 90 °, preferably around 90 °, that is, the surface of the first adapter 31 perpendicular to its thickness direction is basically perpendicular to the axial direction of the battery. The first adapter part can be integrally formed, and for example, it can be integrally formed by the first connection sheet, the horizontal portion, the first extension portion and the first adapter.

In general, the first insulation layer 11 surrounds the side wall of the shell, which is equivalent to that the side wall of the shell is located in a cavity formed by the first insulation layer 11. In some embodiments, the first metal sheet 21, the first insulation sheet 23, the second metal sheet 22, the sealing piece 5 and the first connection sheet 34 are concentrically arranged. An outer diameter of the first metal sheet 21, an outer diameter of the first insulation sheet 23, an outer diameter of the second metal sheet 22, a diameter of the sealing piece 5 and a diameter of the first connection sheet 34 are sequentially reduced. A fourth insulation layer 14 is further provided in an area not covered by the first insulation sheet 23 in a surface of the second metal sheet 22 away from the cavity 6. A side of the fourth insulation layer 14 is connected to the first insulation sheet 23, and the other side thereof is connected to the first insulation layer 11 of the side wall. The fourth insulation layer 14 is located between the horizontal portion 33 of the first pin and the first metal sheet 21, so that the first pin is insulated from the first metal sheet 21 through the fourth insulation layer 14 to avoid short circuit and other phenomenon.

In the present application, the second pin can be in a straight shape, that is, the second pin is a flat structure extending outward from the second connection sheet. A surface of the flat structure perpendicular to its thickness direction is basically parallel to a surface of the second connection sheet perpendicular to its thickness direction. The second pin can also be in other shape such as an L-shape. In some preferred embodiments, a part of the other end of the second pin extending out of the outer edge of the bottom shell is the second adapter (such as the second adapter 41 and the second adapter 41' in FIGs. 1 to 4); the second pin further includes a second extension portion extending to the side wall of the shell 1 (such as the second extension portion 42 of the conductive pin and the second extension portion 42' of the positioning pin in FIG. 1), the second connection sheet is connected to one end of the second extension portion, and the second adapter is connected to the other end of the second extension portion, and the second extension portion is connected to the side wall of the shell through the first insulation layer 11 (i.e., the first insulation layer 11 is located between the second extension portion and the side wall). This structure facilitates the assembly of the battery into the electronic product through the second adapter, and it not only achieves circuit communication between the battery and the electronic product, but also facilitates the positioning of the battery in the electronic product through the second adapter, improving the stability of the battery in the electronic product.

In general, an orthographic projection of the bottom shell 15 perpendicular to the axial direction of the battery covers an orthographic projection of the second connection sheet perpendicular to the axial direction of the battery, that is, the second connection sheet does not exceed beyond the outer edge of the bottom shell. For example, a cross section of the bottom shell perpendicular to its thickness direction is circular, and a cross section of the second connection sheet perpendicular to its thickness direction is semi-circular, the bottom shell is concentric with the second connection sheet, and an outer diameter of the bottom shell is not less than an outer diameter of the second connection sheet, and generally larger than the outer diameter of the second connection sheet, the second pin bends at a junction between the bottom shell and the side wall and extends to the side wall of the shell through the second extension portion, so that the second adapter is located on a side surface of the shell. Specifically, the second pin includes the second bending portion and the second extension portion. The second connection sheet, the second bending portion and the second extension portion are sequentially connected, and the second pin bends at a junction between the bottom shell and the side wall through the second bending portion so that the second extension portion is located on the side wall of the shell, that is, one end of the first bending portion is connected to the second connection sheet located on the bottom shell, and other end thereof is connected to one end of the second extension portion located on the side wall of the shell, and the other end of the second extension portion is connected to the second adapter, and the second bending portion and the second extension portion are connected to the side wall of the shell through the first insulation layer 11.

Optionally, the second adapter can be in the form of sheet, and an included angle between a plane where a surface of the second adapter perpendicular to the thickness direction of the second adapter is located and the axial direction of the battery is less than or equal to 90 °, preferably around 90 °, that is, the surface of the second adapter part perpendicular to its thickness direction is basically perpendicular to the axial direction of the battery. The second adapter can be integrally formed, and for example, it can be integrally formed by the second connection sheet, the second bending portion, the second extension portion and the first adapter.

In the present application, there may be one or more second pins, preferably at least two second pins, where at least one of them serves as a conductive pin as a wire for connecting to the peripheral circuit and at least one serves as a positioning pin as a positioning structure for assembling the battery into the electronic product. At the same time, a conductive pin and a positioning pin are set on the second adapter part, where the conductive pin and positioning pin are integrally formed, to further simplify the battery structure and to improve the structural stability and other performance of the battery.

In some embodiments, the second pin includes a positioning pin and a conductive pin. In a projection of the battery perpendicular to a direction from the bottom shell to the top cover, the positioning pin can be located between the conductive pin and the first pin.

In addition, in a direction from the bottom shell 15 to the top cover, a distance from the second adapter 41' of the positioning pin to the top cover is greater than or equal to a distance from the second adapter 41 of the conductive pin to the top cover, and/or a distance from the second adapter 41' of the positioning pin to the top cover is greater than or equal to a distance from the first adapter 31 of the first pin to the top cover, that is, the second adapter 41' of the positioning pin can be no higher than the second adapter 41 of the conductive pin and/or the first adapter 31 of the first pin. A distance from the second adapter 41' of the positioning pin to the bottom shell 15 is less than or equal to a distance from the second adapter 41 of the conductive pin to the bottom shell 15 and/or a distance from the first adapter 31 of the first pin to the bottom shell. Generally, the second adapter 41' of the positioning pin is preferably lower than the second adapter 41' of the conductive pin and/or the first adapter 31 of the first pin (i.e., the second adapter 41' of the positioning pin is located below the second adapter 41 and/or the first adapter 31 of the first pin, and the second adapter 41 of the conductive pin and/or the first adapter 31 of the first pin is closer to the top cover than the second adapter 41' of the positioning pin); for example, the second adapter 41' of the positioning pin can be located below the second adapter 41 of the conductive pin, or below the first adapter 31 of the first pin, or below both the first adapter 31 of the first pin and the second adapter 41 of the conductive pin (as shown in FIG. 1), where distances from the second adapter 41 of the conductive pin and the first adapter 31 of the first pin to the top cover can be basically equal or unequal, that is, heights of both of them on the side wall of the shell can be the same or different, and the present application does not have any particular restrictions on this. The distance is a vertical distance from the first adapter or the second adapter to the top cover.

In the present application, the second adapter part 4 can be specifically welded to the bottom shell 15 and electrically connected to the second tab through the bottom shell 15. In some embodiments, the second connection sheet includes a third connection portion 43, a fourth connection portion 44, and a transition portion connected between the third connection portion 43 and the fourth connection portion 44, where the third connection portion 43 is welded to the bottom shell 15; a top surface of the fourth connection portion 44 (a surface facing the bottom shell) is higher than a top surface of the third connection portion 43 (a surface facing the bottom shell) and/or a bottom surface of the fourth connection portion (a surface facing away the bottom shell) is higher than a bottom surface of the third connection portion (a surface facing away the bottom shell). That is, it is satisfied that the top surface of the fourth connection portion 44 is farther away from the bottom shell 15 than the top surface of the third connection portion 43 and/or the bottom surface of the fourth connection portion 44 is farther away from the bottom shell 15 than the bottom surface of the third connection portion 43 to the bottom shell 15, which is equivalent to that the second connection sheet is bent through the transition portion to form the third connection portion 43 and the fourth connection portion 44, respectively. Through this structural design, it can play a role of magnetic shielding, that is, a magnetic field generated by the current during operation of the battery is shielded, so that an impact of the magnetic field on the electronic product using the battery is avoided, such as the electronic product generating noise and other phenomenon caused by the magnetic field are avoided, and thus the performance of the battery is further improved.

In some embodiments, the bottom shell 15 is further provided with a second insulation layer, and the second connection sheet includes a third connection portion 43, a fourth connection portion 44, and a transition portion connected between the third connection portion 43 and the fourth connection portion 44, where the third connection portion 43 is welded to the bottom shell 15, and the fourth connection portion 44 is connected to the bottom shell 15 through the second insulation layer 12 (i.e., the second insulation layer 12 is located between the fourth connection portion 44 and the bottom shell 15). As shown above, a top surface of the fourth connection portion 44 is generally higher than a top surface of the third connection portion and/or a bottom surface of the fourth connection portion is higher than a bottom surface of the third connection portion (the surface facing away the bottom shell).

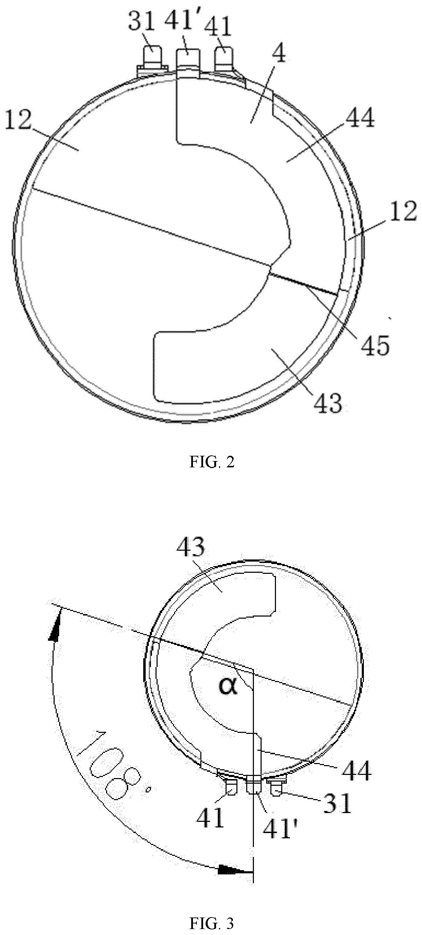

In some embodiments, a thickness of the second insulation layer 12 can be 0.05mm-0.1mm, such as 0.05mm, 0.08mm, 0.1mm, etc. An orthographic projection of the second insulation layer 12 perpendicular to a thickness direction of the fourth connection portion 44 covers an orthographic projection of the fourth connection portion 44 perpendicular to a thickness direction of the fourth connection portion 44. A surface area of the second insulation layer 12 can be approximately 1/3 to 1/2 of surface area of the bottom shell, and its shape is, but not limited to, for example, a semi-circular (as shown in FIGs. 1 and 2).

In some embodiments, the third connection portion 43 is welded to the bottom shell 15, and a second welded mark generated by this welding runs through the third connection portion 43 and extends to 1/3 to 2/3 of the thickness of the bottom shell 15, which is conducive to further improving the structural stability and other performance of the battery. In a specific implementation, a laser welding method can be used for welding. During the welding process, the third connection portion 43 of the second connection sheet is stacked on the bottom shell 15, and then laser is projected to the third connection portion 43 for welding. A welding strengthen is controlled by adjusting laser welding parameters, so that the generated welded mark runs through the third connection portion 43 and extends to 1/3 to 2/3 of the thickness of the bottom shell 15, that is, a length of the welded mark generated in the bottom shell 15 in the thickness direction of the bottom shell 15 is approximately 1/3 to 2/3 of the thickness of the bottom shell 15 (i.e., a depth of fusion of the bottom shell 15 caused by this welding is approximately 1/3 to 2/3 of the thickness of the bottom shell 15).

In the present application, the second pin can be specifically set on the fourth connection portion 44, that is, one end of the second pin is connected to the fourth connection portion 44, and other end thereof serves as a connector for connecting the peripheral circuit. In some embodiments, the second pin includes a conductive pin and a positioning pin, and the second adapter 41' of the positioning pin is located between the first adapter 31 of the first pin and the second adapter 41 of the conductive pin. In an orthogonal projection of the shell perpendicular to a direction from the bottom shell 15 to the top cover, the second adapter 41' of the positioning pin is located between the first adapter 31 of the first pin and the second adapter 41 of the conductive pin, and it is satisfied that an included angle between a first connection line and a second connection line is α, with α> 30 °, where the first connection line is a straight line passing through a center point of an orthogonal projection of the bottom shell 15 and bisecting the transition portion, and the second connection line is a straight line passing through the center point of the orthogonal projection of the bottom shell 15 and bisecting the second adapter 41' of the positioning pin. Where, the first connection line bisects the transition portion, that is, a distance from the first connection line to a junction between the transition portion and the third connection portion 43 is basically equal to a distance from the first connection line to a junction between the transition portion and the fourth connection portion 44, and the second connection line bisects the second adapter 41' of the positioning pin, that is, a distance from the second connection line to one side (designated as a first side) of the second adapter 41' of the positioning pin is basically equal to a distance from the second connection line to the other side (designated as a second side) of the second adapter 41' of the positioning pin. The first side is opposite to the second side, and a center point of the orthogonal projection of the bottom shell 15 is located at a center of the orthogonal projection of the top cover. For example, the orthogonal projection of the bottom shell 15 is circular, then the center point is a center of a circle of the orthogonal projection of the bottom shell 15; or the orthographic projection of the bottom shell 15 is a rectangle (or square), then the center point is an intersection of two diagonal lines of the rectangle (or square). Optionally, α can be 40 °, 50 °, 60 °, 70 °, 80 °, 90 °, 100 °, 110 °, 120 °, 130 °, 140 °, or an angle value in a range consisting of any two of them, generally, it can be preferably 60 ° ≤ α≤ 140 °, more preferably 100 ° ≤ α≤ 125 °, for example 108 ° (as shown in FIG. 3).

In a specific implementation, the conductive pin can be used as the wire between the battery and the peripheral circuit, and the second adapter thereof serves as a connector for connecting to the peripheral circuit; the positioning pin is used as a positioning structure for assembling the battery in the electronic product, so that the battery is snapped into the electronic product through the second adapter (or called as positioning sheet) of the positioning pin, achieving the assembly of the battery in the electronic product. However, it is not limited to the above, since the positioning pin, the conductive pin and the second connection sheet are integrally formed and they all have conductivity, the functions of the positioning pin and the conductive pin can also be interchanged as needed, that is, the positioning pin is used as the wire between the battery and the peripheral circuit, while the conductive pin is used as the positioning structure for assembling the battery in the electronic product.

Specifically, a cross section of the second connection sheet perpendicular to the thickness direction of the second connection sheet can be an incomplete circular ring (or arc) with an opening, that is, one end of the third connection portion 43 is connected to one end of the fourth connection portion 44 and the other end of the third connection portion 43 is not connected to the other end of the fourth connection portion 44, to form a circular opening, so that a cross section of the second connection sheet is an incomplete circular ring with an opening, for example, it is a semi-circular ring. In general, the outer edge of the second connection sheet is in a shape of arc, and the arc is basically concentric with the outer edge of the shell, which facilitates the processing and positioning of the battery. The "basically concentric" refers to that a degree of concentricity between the two is within an error range, that is, due to existence of a processing error, it is usually not possible to achieve complete concentricity, and only being concentric as much as possible.

In the present application, the above-mentioned battery further includes a second insulation sheet 7 located on a side of the top cover away from the cavity 6. An orthographic projection of the second insulation sheet 7 perpendicular to the thickness direction of the top cover covers an orthographic projection of the top cover perpendicular to the thickness direction of the top cover. That is, parts that the first connection sheet 34, the horizontal portion 33 of the first pin, the second metal sheet 22, the first metal sheet 21 and the like are located on the top cover are all covered by the second insulation sheet 7, which is conducive to further improving the safety and other performance of the battery, preventing short circuit and other phenomenon when assembling the battery to a terminal product (such as a wearable electronic product) or during transportation, use and other process.

The above-mentioned battery cell 9 includes a positive electrode sheet, a negative electrode sheet, and a diaphragm located between the positive electrode sheet and the negative electrode sheet. The diaphragm is used to separate the positive electrode sheet and the negative electrode sheet, avoiding short circuit caused by a contact between the positive electrode sheet and the negative electrode sheet. The present application may use conventional positive electrode sheet, negative electrode sheet and diaphragm in the art, without particular restrictions. The first tab and second tab have opposite polarities, where one of them serves as the positive electrode tab for electrically connecting to the positive electrode sheet, and the other serves as the negative electrode tab for electrically connecting to the negative electrode sheet. Generally, it is preferred that the first tab is the positive electrode tab, and the second tab is the negative electrode tab.

The above-mentioned battery cell 9 can be a coiled type battery cell 9 (or called as a coiled cell), that is, the positive electrode sheet, the diaphragm and the negative electrode sheet therein are sequentially stacked and coiled to form a coiled structure; or it can be a laminated type battery cell 9 with a laminated structure, that is, the positive electrode sheet, diaphragm and negative electrode sheet therein are sequentially laminated to form a laminated structure. However, it is not limited to the above.

In addition, there may be one or more battery cells 9 located in the cavity 6. When there are more battery cells 9, the positive electrode sheets of all the battery cells 9 are connected to the positive electrode tab, and the negative electrode sheets of all the battery cells 9 are connected to the negative electrode tab.

In the present application, the shell 1, the first metal sheet 21, the sealing piece 5, the second metal sheet 22, the first tab, the second tab, the first adapter part 3 and the second adapter part 4 can be conventional conductive materials in the art, such as metal materials. For example, the first adapter part 3 can be nickel or stainless-steel material, that is, it can be nickel or stainless-steel sheet; and the second adapter part 4 can be nickel or stainless-steel material, that is, it can be nickel or stainless-steel sheet. The first insulation sheet 23, the first insulation layer 11, the second insulation sheet 7, the second insulation layer 12, the third insulation layer 13 and the fourth insulation layer 14 can be conventional insulation adhesives in this field, such as PP adhesive formed from polypropylene. Specifically, a layer of insulation adhesive can be first applied to an area corresponding to the straight portion 8 of the first tab on a surface of the second metal sheet 22 close to the cavity 6, and then the straight portion 8 of the first tab is welded to the second connection portion 222 of the second metal sheet 22; a layer of insulation adhesive is first applied to an area on the first metal sheet 21 corresponding to the horizontal portion 33 of the first pin and an area on a bottom surface of the shell 1 corresponding the fourth connection portion 44 of the second adapter 4, on an outer side surface of the shell 1 (i.e., a surface of wall of the cavity away from the cavity), and then, the third connection portion 43 of the second connection sheet of the second adapter part 4 is welded to the bottom surface of the shell 1, and its fourth connection portion 44 is adhered to the bottom surface of the shell 1 through an insulation adhesive, and the first connection sheet 34 of the first adapter part 3 is welded to the sealing piece 5 and the first pin of the first adapter part 3 is insulated from the shell 1 and the first insulation layer 11. Generally, all areas of the outer side of wall of the cavity (i.e., the side surface of the shell 1) are provided with the first insulation layer 11, which is equivalent to that the cavity wall is located in the cavity 6 formed by the first insulation layer 11.

The above explains the implementation mode of the present application. However, the present application is not limited to the aforementioned implementation modes. The scope of protection is defined by the appended claims.

## Claims

1. A battery, comprising a shell (1), a top cover (2), a battery cell (9) and a second adapter part (4), wherein the top cover (2) seals an upper end of the shell (1) and forms a cavity (6) together with the shell (1), the battery cell (9) is located within the cavity (6), the shell (1) comprises a side wall surrounding the cavity (6) and a bottom shell (15) arranged at a lower end of the side wall, the battery cell (9) has a first tab and a second tab, and the first tab has a polarity opposite to the second tab; wherein the bottom shell (15) is electrically connected to the second tab, and the second adapter part (4) comprises a second connection sheet and a second pin, the second adapter part (4) is connected to the bottom shell (15) through the second connection sheet; one end of the second pin is connected to the second connection sheet, and the other end of the second pin extends out of an outer edge of the bottom shell (15),
wherein the second connection sheet comprises a third connection portion (43), a fourth connection portion (44), and a transition portion (45) connected between the third connection portion (43) and the fourth connection portion (44), wherein the third connection portion (43) is welded to the bottom shell (15);
a top surface of the fourth connection portion (44) is higher than a top surface of the third connection portion (43), and/or a bottom surface of the fourth connection portion (44) is higher than a bottom surface of the third connection portion (43),
wherein the bottom shell (15) is further provided with a second insulation layer (12), and the fourth connection portion (44) is connected to the bottom shell (15) through the second insulation layer (12).

2. The battery according to claim 1, wherein the top cover (2) comprises a first metal sheet (21), a first insulation sheet (23) and a second metal sheet (22), the first metal sheet (21) is connected to the upper end of the shell (1) to achieve the top cover (2) sealing the upper end of the shell (1), and the second metal sheet (22) is insulatively connected to the first metal sheet (21) through the first insulation sheet (23);
the top cover (2) is provided with a through hole that runs through the first metal sheet (21) and the first insulation sheet (23), the through hole is communicated with the cavity (6), the second metal sheet (22) comprises a first connection portion (221) and a second connection portion (222) connected to the first connection portion (221), the first connection portion (221) is connected to the first insulation sheet (23), and the second connection portion (222) is provided at the through hole and seals the through hole;
the battery further comprises a first adapter part (3), the first adapter part (3) comprises a first connection sheet (34) and a first pin, one end of the first pin is connected to the first connection sheet (34), and the other end of the first pin extends out of an outer edge of the top cover (2);
the second connection portion (222) is electrically connected to the first tab, and the first adapter part (3) is connected to the second connection portion (222) through the first connection sheet (34).

3. The battery according to claim 2, wherein an outer peripheral edge of the first metal sheet is welded to an upper end of the side wall to achieve the top cover (2) sealing the upper end of the shell (1); and/or
wherein the first connection sheet (34) is welded to the second connection portion (222), and a first welded mark generated by welding runs through the first connection sheet (34) and extends to 1/3 to 2/3 of a thickness of the second connection portion (222); and/or
wherein the first adapter part (3) is located on a side of the second metal sheet (22) away from the cavity (6).

4. The battery according to claim 2, wherein the second connection portion (222) is provided with a liquid injection hole communicated with the cavity (6) and a sealing piece (5) for sealing the liquid injection hole, the sealing piece (5) is located on a side of the second connection portion (222) away from the cavity (6), and the sealing piece (5) is electrically connected to the first tab through the second connection portion (222), and the first connection sheet (34) is welded to the sealing piece (5);
wherein a first welded mark generated by welding runs through the first connection sheet (34) and extends to 1/3 to 2/3 of a thickness of the sealing piece (5); and/or wherein a surface of the sealing piece (5) away from the cavity (6) is no higher than a surface of the first connection portion (221) away from the cavity (6).

5. The battery according to claim 2, wherein a first insulation layer (11) is provided on a side wall of the shell (1) and at least one of the following features is met:
a part where the other end of the first pin extends out of the outer edge of the top cover (2) is the first adapter (31), and the first pin further comprises a first extension portion (32) extending to the side wall of the shell (1), one end of the first extension portion (32) is connected to the first connection sheet (34), and the other end of the first extension portion (32) is connected to the first adapter (31), the first extension portion (32) is insulated from the side wall through the first insulation layer (11);
a part where the other end of the second pin extends out of the outer edge of the bottom shell (15) is the second adapter (41, 41'), the second pin further comprises a second extension portion (42, 42') extending to the side wall of the shell (1), one end of the second extension portion (42, 42') is connected to the second connection sheet, and the other end of the second extension portion (42, 42') is connected to the second adapter (41, 41'), and the second extension portion (42, 42') is connected to the side wall of the shell (1) through the first insulation layer (11).

6. The battery according to claim 5, wherein the second pin comprises a positioning pin and a conductive pin, and in a direction from the bottom shell (15) to the top cover (2), a distance from the second adapter (41, 41') of the positioning pin to the top cover (2) is greater than or equal to a distance from the second adapter (41, 41') of the conductive pin to the top cover (2), and/or, a distance from the second adapter (41, 41') of the positioning pin to the top cover (2) is greater than or equal to a distance from the first adapter (31) of the first pin to the top cover (2).

7. The battery according to claim 2, wherein the second pin comprises a positioning pin and a conductive pin, and in a projection of the battery perpendicular to a direction from the bottom shell (15) to the top cover (2), the positioning pin is located between the conductive pin and the first pin.

8. The battery according to claim 2, wherein the second connection sheet comprises a third connection portion (43), a fourth connection portion (44), and a transition portion (45) connected between the third connection portion (43) and the fourth connection portion (44), wherein the third connection portion (43) is welded to the bottom shell (15), a top surface of the fourth connection portion (44) is higher than a top surface of the third connection portion (43), and/or a bottom surface of the fourth connection portion (44) is higher than a bottom surface of the third connection portion (43);
a part where the other end of the first pin extends out of the outer edge of the top cover (2) is the first adapter (31), and a part where the other end of the second pin extends out of the outer edge of the bottom shell (15) is the second adapter (41, 41'); the second pin comprises a conductive pin and a positioning pin, and in a projection of the shell (1) perpendicular to a direction from the bottom shell (15) to the top cover (2), the second adapter (41, 41') of the positioning pin is located between the first adapter (31) of the first pin and the second adapter (41, 41') of the conductive pin, and an included angle (α) between a first connection line and a second connection line is α, with α> 30 °, wherein the first connection line is a straight line passing through a center point of an orthographic projection of the top cover (2) and bisecting the transition portion (45), and the second connection line is a straight line passing through the center point of the orthographic projection of the top cover (2) and bisecting the second adapter (41, 41') of the positioning pin.

9. The battery according to claim 1 or 8, wherein the second pin is arranged on the fourth connection portion (44); and/or
wherein a second welded mark generated by welding runs through the third connection portion (43) and extends to 1/3 to 2/3 of a thickness of the bottom shell (15).

10. The battery according to claim 8, wherein 60 ° ≤ α≤ 140 °, or 100 ° ≤ α≤ 125 °.

11. The battery according to claim 1, wherein the second insulation layer (12) has a thickness of 0.05mm-0.1mm.

12. The battery according to claim 1, wherein a cross section of the second connection sheet perpendicular to a thickness direction of the second connection sheet is in a shape of incomplete semi-circular ring with an opening; and/or
wherein an outer edge of the second connection sheet is an arc, and the arc is basically concentric with the outer edge of the shell (1); and/or
wherein the second adapter part (4) is located on a side of the bottom shell (15) away from the cavity (6).

13. The battery according to claim 1, further comprising a second insulation sheet (7) arranged at a side of the top cover (2) away from the cavity (6), wherein an orthographic projection of the second insulation sheet (7) perpendicular to a thickness direction of the top cover (2) covers an orthographic projection of the top cover (2) perpendicular to the thickness direction of the top cover (2); and/or
wherein the first tab is a positive electrode tab, and the second tab is a negative electrode tab; and/or
wherein the battery is a button battery.

## Patentansprüche

1. Batterie, umfassend eine Hülse (1), eine obere Abdeckung (2), eine Batteriezelle (9) und einen zweiten Adapterteil (4), wobei die obere Abdeckung (2) ein oberes Ende der Hülse (1) abdeckt und zusammen mit der Hülse (1) eine Ausnehmung (6) bildet, die Batteriezelle (9) innerhalb der Ausnehmung (6) angeordnet ist, die Hülse (1) eine Seitenwand umfasst, die die Ausnehmung (6) umgibt, und eine Bodenhülse (15) an einem unteren Ende der Seitenwand angeordnet ist, die Batteriezelle (9) eine erste Lasche und eine zweite Lasche aufweist und die erste Lasche eine zur zweiten Lasche entgegengesetzte Polarität aufweist; wobei die Bodenhülse (15) elektrisch an die zweite Lasche angeschlossen ist und der zweite Adapterteil (4) ein zweites Anschlussblech und einen zweiten Stift umfasst, der zweite Adapterteil (4) durch das zweite Anschlussblech an die Bodenhülse (15) angeschlossen ist; ein Ende des zweiten Stiftes an das zweite Anschlussblech angeschlossen ist und das andere Ende des zweiten Stiftes sich aus einer Außenkante der Bodenhülse (15) heraus erstreckt,
wobei das zweite Anschlussblech einen dritten Anschlussabschnitt (43), einen vierten Anschlussabschnitt (44) und einen Übergangsabschnitt (45) umfasst, der zwischen dem dritten Anschlussabschnitt (43) und dem vierten Anschlussabschnitt (44) angeschlossen ist, wobei der dritte Anschlussabschnitt (43) an der Bodenhülse (15) verlötet ist;
eine obere Fläche des vierten Anschlussabschnitts (44) ist höher als eine obere Fläche des dritten Anschlussabschnitts (43) und/oder eine Bodenfläche des vierten Anschlussabschnitts (44) ist höher als eine Bodenfläche des dritten Anschlussabschnitts (43),
wobei die Bodenhülse (15) weiterhin mit einer zweiten Isolationsschicht (12) bereitgestellt ist und der vierte Anschlussabschnitt (44) durch die zweite Isolationsschicht (12) an die Bodenhülse (15) angeschlossen ist.

2. Batterie nach Anspruch 1, wobei die obere Abdeckung (2) ein erstes Metallblech (21), ein erstes Isolationsblech (23) und ein zweites Metallblech (22) umfasst, das erste Metallblech (21) an das obere Ende der Hülse (1) angeschlossen ist, um die obere Abdeckung (2) zu erreichen, die das obere Ende der Hülse (1) abdichtet, und das zweite Metallblech (22) durch das erste Isolationsblech (23) isolierend an das erste Metallblech (21) angeschlossen ist;
die obere Abdeckung (2) ist mit einem Durchgangsloch bereitgestellt, das durch das erste Metallblech (21) und das erste Isolationsblech (23) hindurchläuft, das Durchgangsloch steht mit der Ausnehmung (6) in Verbindung, das zweite Metallblech (22) umfasst einen ersten Anschlussabschnitt (221) und einen zweiten Anschlussabschnitt (222), der an den ersten Anschlussabschnitt (221) angeschlossen ist, der erste Anschlussabschnitt (221) ist an das erste Isolationsblech (23) angeschlossen und der zweite Anschlussabschnitt (222) ist an dem Durchgangsloch bereitgestellt und dichtet das Durchgangsloch ab;
die Batterie umfasst weiterhin einen ersten Adapterteil (3), der erste Adapterteil (3) umfasst ein erstes Anschlussblech (34) und einen ersten Stift, ein Ende des ersten Stiftes ist an das erste Anschlussblech (34) angeschlossen und das andere Ende des ersten Stiftes erstreckt sich aus einer Außenkante der oberen Abdeckung (2) heraus;
der zweite Anschlussabschnitt (222) ist elektrisch an die erste Lasche angeschlossen und der erste Adapterteil (3) ist durch das erste Anschlussblech (34) an den zweiten Anschlussteil (222) angeschlossen.

3. Batterie nach Anspruch 2, wobei eine umlaufende Außenkante des ersten Metallblechs an einem oberen Ende der Seitenwand verlötet ist, um die obere Abdeckung (2) zu erreichen, die das obere Ende der Hülse (1) abdichtet; und/oder
wobei das erste Anschlussblech (34) am zweiten Anschlussabschnitt (222) verlötet ist und eine erste gelötete Markierung, die durch Löten erzeugt ist, durch das erste Anschlussblech (34) hindurch verläuft und sich zu 1/3 bis zu 2/3 einer Dicke des zweiten Anschlussabschnitts (222) erstreckt; und/oder
wobei der erste Adapterteil (3) auf einer Seite des zweiten Metallblechs (22) von der Ausnehmung (6) weg angeordnet ist.

4. Batterie nach Anspruch 2, wobei der zweite Anschlussabschnitt (222) mit einem Flüssigkeits-Einspritzloch bereitgestellt ist, das mit der Ausnehmung (6) und einem Abdichtungsstück (5) zum Abdichten des Flüssigkeits-Einspritzlochs in Verbindung steht, das Abdichtungsstück (5) auf einer Seite des zweiten Anschlussabschnitts (222) von der Ausnehmung (6) weg angeordnet ist und das Abdichtungsstück (5) durch den zweiten Anschlussabschnitt (222) elektrisch an die erste Lasche angeschlossen ist und das erste Anschlussblech (34) an dem Abdichtungsstück (5) verlötet ist;
wobei eine erste gelötete Markierung, die durch Löten erzeugt ist, durch das erste Anschlussblech (34) hindurch verläuft und sich von 1/3 bis zu 2/3 einer Dicke des Abdichtungsstücks (5) erstreckt; und/oder wobei eine Fläche des Abdichtungsstücks (5) von der Ausnehmung (6) weg nicht höher ist als eine Fläche des ersten Anschlussabschnitts (221) von der Ausnehmung (6) weg.

5. Batterie nach Anspruch 2, wobei eine erste Isolationsschicht (11) auf einer Seitenwand der Hülse (1) bereitgestellt ist und wenigstens eines der folgenden Merkmale erfüllt ist:
ein Teil, bei dem das andere Ende des ersten Stiftes sich aus der Außenkante der oberen Abdeckung (2) erstreckt, ist der erste Adapter (31), und der erste Stift umfasst weiterhin einen ersten Erstreckungsabschnitt (32), der sich zur Seitenwand der Hülse (1) erstreckt, ein Ende des ersten Erstreckungsabschnitts (32) ist an das erste Anschlussblech (34) angeschlossen, und das andere Ende des ersten Erstreckungsabschnitts (32) ist an den ersten Adapter (31) angeschlossen, der erste Erstreckungsabschnitt (32) ist durch die erste Isolationsschicht (11) von der Seitenwand isoliert;
ein Teil, bei dem das andere Ende des zweiten Stiftes sich aus der Außenkante der Bodenhülse (15) heraus erstreckt, ist der zweite Adapter (41, 41'), der zweite Stift umfasst weiterhin einen zweiten Erstreckungsabschnitt (42, 42'), der sich zur Seitenwand der Hülse (1) erstreckt, ein Ende des zweiten Erstreckungsabschnitts (42, 42') ist an das zweite Anschlussblech angeschlossen und das andere Ende des zweiten Erstreckungsabschnitts (42, 42') ist an den zweiten Adapter (41, 41') angeschlossen und der zweite Erstreckungsabschnitt (42, 42') ist durch die erste Isolationsschicht (11) an der Seitenwand der Hülse (1) angeschlossen.

6. Batterie nach Anspruch 5, wobei der zweite Stift einen anordnenden Stift und einen leitenden Stift umfasst und in einer Richtung von der Bodenhülse (15) zur oberen Abdeckung (2) eine Entfernung vom zweiten Adapter (41, 41') des anordnenden Stifts zur oberen Abdeckung (2) größer als oder gleich ist wie eine Entfernung vom zweiten Adapter (41, 41') des leitenden Stiftes zur oberen Abdeckung (2) und/oder eine Entfernung vom zweiten Adapter (41, 41') des anordnenden Stiftes zur oberen Abdeckung (2) größer als oder gleich ist wie eine Entfernung vom ersten Adapter (331) des ersten Stiftes zur oberen Abdeckung (2).

7. Batterie nach Anspruch 2, wobei der zweite Stift einen anordnenden Stift und einen leitenden Stift umfasst und der anordnende Stift in einer Projektion der Batterie lotrecht zu einer Richtung von der Bodenhülse (15) zur oberen Abdeckung (2) zwischen dem leitenden Stift und dem ersten Stift angeordnet ist.

8. Batterie nach Anspruch 2, wobei das zweite Anschlussblech einen dritten Anschlussabschnitt (43), einen vierten Anschlussabschnitt (44) und einen Übergangsabschnitt (45) umfasst, der zwischen dem dritten Anschlussabschnitt (43) und dem vierten Anschlussabschnitt (44) angeschlossen ist, wobei der dritte Anschlussabschnitt (43) an der Bodenhülse (15) verlötet ist, eine obere Fläche des vierten Anschlussabschnitts (44) höher ist als eine obere Fläche des dritten Anschlussabschnitts (43) und/oder eine Bodenfläche des vierten Anschlussabschnitts (44) höher ist als eine Bodenfläche des dritten Anschlussabschnitts (43);
ein Teil, bei dem das andere Ende des ersten Stiftes sich aus der Außenkante der oberen Abdeckung (2) heraus erstreckt, der erste Adapter (31) ist, und ein Teil, bei dem das andere Ende des zweiten Stiftes sich aus der Außenkante der Bodenhülse (15) heraus erstreckt, der zweite Adapter (41, 41') ist; der zweite Stift einen leitenden Stift und einen anordnenden Stift umfasst, und der zweite Adapter (41, 41') des anordnenden Stiftes in einer Projektion der Hülse (1) lotrecht zu einer Richtung von der Bodenhülse (15) zur oberen Abdeckung (2) zwischen dem ersten Adapter (31) des ersten Stiftes und dem zweiten Adapter (41, 41') des leitenden Stiftes angeordnet ist und ein inbegriffener Winkel (α) zwischen einer ersten Verbindungslinie und einer zweiten Verbindungslinie α ist, wobei α > 30 °, wobei die erste Verbindungslinie eine gerade Linie ist, die durch einen Mittelpunkt einer Orthogonalprojektion der oberen Abdeckung (2) hindurch verläuft und den Übergangsabschnitt (45) halbiert und die zweite Verbindungslinie eine gerade Linie ist, die durch den Mittelpunkt der Orthogonalprojektion der oberen Abdeckung (2) hindurch verläuft und den zweiten Adapter (41, 41') des anordnenden Stiftes halbiert.

9. Batterie nach Anspruch 1 oder 8, wobei der zweite Stift auf dem vierten Anschlussabschnitt (44) angeordnet ist; und/oder
wobei eine zweite gelötete Markierung, die durch Löten erzeugt ist, durch den dritten Anschlussabschnitt (43) hindurch verläuft und sich von 1/3 bis zu 2/3 einer Dicke der Bodenhülse (15) erstreckt.

10. Batterie nach Anspruch 8, wobei 60 ° ≤ α ≤ 140 ° oder 100 ° ≤ α ≤ 125 °.

11. Batterie nach Anspruch 1, wobei die zweite Isolationsschicht (12) eine Dicke von 005 mm - 0,1 mm aufweist.

12. Batterie nach Anspruch 1, wobei ein Querschnitt des zweiten Anschlussblechs lotrecht zu einer Dickenrichtung des zweiten Anschlussblechs eine Form eines unvollständigen halbkreisförmigen Rings mit einer Öffnung aufweist; und/oder
wobei eine Außenkante des zweiten Anschlussblechs ein Bogen ist und der Bogen im Wesentlichen konzentrisch mit der Außenkante der Hülse (1) ist; und/oder
wobei der zweite Adapterteil (4) auf einer Seite der Bodenhülse (15) von der Ausnehmung (6) weg angeordnet ist.

13. Batterie nach Anspruch 1, weiterhin umfassend ein zweites Isolationsblech (7), das an einer Seite der oberen Abdeckung (2) von der Ausnehmung (6) weg angeordnet ist; wobei eine Orthogonalprojektion des zweiten Isolationsblechs (7) lotrecht zu einer Dickenrichtung der oberen Abdeckung (2) eine Orthogonalprojektion der oberen Abdeckung (2) lotrecht zur Dickenrichtung der oberen Abdeckung (2) abdeckt; und/oder
wobei die erste Lasche eine positive Elektrodenlasche ist und die zweite Lasche eine negative Elektrodenlasche ist; und/oder
wobei die Batterie eine Knopfbatterie ist.

## Revendications

1. Batterie comprenant une coque (1), un couvercle supérieur (2), une cellule de batterie (9) et une deuxième partie d'adaptateur (4),
dans laquelle le couvercle supérieur (2) scelle une extrémité supérieure de la coque (1) et forme une cavité (6) conjointement à la coque (1), la cellule de batterie (9) est située dans la cavité (6), la coque (1) comprend une paroi latérale entourant la cavité (6) et une coque inférieure (15) agencée à une extrémité inférieure de la paroi latérale, la cellule de batterie (9) comporte une première languette et une deuxième languette, et la première languette a une polarité opposée à celle de la deuxième languette,
dans laquelle la coque inférieure (15) est connectée électriquement à la deuxième languette, et la deuxième partie d'adaptateur (4) comprend une deuxième feuille de connexion et une deuxième broche, la deuxième partie d'adaptateur (4) est connectée à la coque inférieure (15) via la deuxième feuille de connexion, une extrémité de la deuxième broche est connectée à la deuxième feuille de connexion, et ladite autre extrémité de la deuxième broche s'étend hors d'un bord externe de la coque inférieure (15),
dans laquelle la deuxième feuille de connexion comprend une troisième portion de connexion (43), une quatrième portion de connexion (44) et une portion de transition (45) connectée entre la troisième portion de connexion (43) et la quatrième portion de connexion (44),
dans laquelle la troisième portion de connexion (43) est soudée à la coque inférieure (15), une surface supérieure de la quatrième portion de connexion (44) est plus haute qu'une surface supérieure de la troisième portion de connexion (43), et/ou une surface inférieure de la quatrième portion de connexion (44) est plus haute qu'une surface inférieure de la troisième portion de connexion (43),
dans laquelle la coque inférieure (15) est en outre pourvue d'une deuxième couche d'isolation (12), et la quatrième portion de connexion (44) est connectée à la coque inférieure (15) via la deuxième couche d'isolation (12).

2. Batterie selon la revendication 1, dans laquelle
le couvercle supérieur (2) comprend une première feuille métallique (21), une première feuille d'isolation (23) et une deuxième feuille métallique (22), la première feuille métallique (21) est connectée à l'extrémité supérieure de la coque (1) pour obtenir que le couvercle supérieur (2) scelle l'extrémité supérieure de la coque (1), et la deuxième feuille métallique (22) est connectée de manière isolante à la première feuille métallique (21) via la première feuille d'isolation (23) ;
le couvercle supérieur (2) est pourvu d'un trou traversant qui traverse la première feuille métallique (21) et la première feuille d'isolation (23), le trou traversant communique avec la cavité (6), la deuxième feuille métallique (22) comprend une première portion de connexion (221) et une deuxième portion de connexion (222) connectée à la première portion de connexion (221), la première portion de connexion (221) est connectée à la première feuille d'isolation (23), et la deuxième portion de connexion (222) est pourvue sur le trou traversant et scelle le trou traversant ;
la batterie comprend en outre une première partie d'adaptateur (3), la première partie d'adaptateur (3) comprend une première feuille de connexion (34) et une première broche, une extrémité de la première broche est connectée à la première feuille de connexion (34), et ladite autre extrémité de la première broche s'étend hors d'un bord externe du couvercle supérieur (2) ;
la deuxième portion de connexion (222) est connectée électriquement à la première languette, et la première partie d'adaptateur (3) est connectée à la deuxième portion de connexion (222) via la première feuille de connexion (34).

3. Batterie selon la revendication 2,
dans laquelle un bord périphérique externe de la première feuille métallique est soudé à une extrémité supérieure de la paroi latérale pour obtenir que le couvercle supérieur (2) scelle l'extrémité supérieure de la coque (1) ; et/ou
dans laquelle la première feuille de connexion (34) est soudée à la deuxième portion de connexion (222), et une première marque de soudure générée par soudage traverse la première feuille de connexion (34) et s'étend entre 1/3 et 2/3 de l'épaisseur de la deuxième portion de connexion (222) ; et/ou
dans laquelle la première partie d'adaptateur (3) est située sur un côté de la deuxième feuille métallique (22) éloigné de la cavité (6).

4. Batterie selon la revendication 2,
dans laquelle la deuxième portion de connexion (222) est pourvue d'un trou d'injection de liquide communiquant avec la cavité (6) et d'une pièce d'étanchéité (5) pour sceller le trou d'injection de liquide, la pièce d'étanchéité (5) est située sur un côté de la deuxième portion de connexion (222) éloigné de la cavité (6), et la pièce d'étanchéité (5) est connectée électriquement à la première languette via la deuxième portion de connexion (222), et la première feuille de connexion (34) est soudée à la pièce d'étanchéité (5) ;
dans laquelle une première marque de soudure générée par soudage traverse la première feuille de connexion (34) et s'étend sur 1/3 à 2/3 de l'épaisseur de la pièce d'étanchéité (5) ; et/ou
dans laquelle une surface de la pièce d'étanchéité (5) éloignée de la cavité (6) n'est pas plus haute qu'une surface de la première portion de connexion (221) éloignée de la cavité (6).

5. Batterie selon la revendication 2, dans laquelle une première couche d'isolation (11) est pourvue sur une paroi latérale de la coque (1) et au moins l'une des caractéristiques suivantes est présente :
une partie où ladite autre extrémité de la première broche s'étend hors du bord externe du couvercle supérieur (2) est le premier adaptateur (31), et la première broche comprend en outre une première portion d'extension (32) qui s'étend jusqu'à la paroi latérale de la coque (1), une extrémité de la première portion d'extension (32) est connectée à la première feuille de connexion (34), et ladite autre extrémité de la première portion d'extension (32) est connectée au premier adaptateur (31), et la première portion d'extension (32) est isolée de la paroi latérale par la première couche d'isolation (11) ;
une partie où ladite autre extrémité de la deuxième broche s'étend hors du bord externe de la coque inférieure (15) est le deuxième adaptateur (41, 41'), la deuxième broche comprend en outre une deuxième portion d'extension (42, 42') qui s'étend jusqu'à la paroi latérale de la coque (1), une extrémité de la deuxième portion d'extension (42, 42') est connectée à la deuxième feuille de connexion, et ladite autre extrémité de la deuxième portion d'extension (42, 42') est connectée au deuxième adaptateur (41, 41'), et la deuxième portion d'extension (42, 42') est connectée à la paroi latérale de la coque (1) via la première couche d'isolation (11).

6. Batterie selon la revendication 5, dans laquelle la deuxième broche comprend une broche de positionnement et une broche conductrice, et dans la direction allant de la coque inférieure (15) au couvercle supérieur (2), la distance entre le deuxième adaptateur (41, 41') de la broche de positionnement et le couvercle supérieur (2) est supérieure ou égale à la distance entre le deuxième adaptateur (41, 41') de la broche conductrice et le couvercle supérieur (2), et/ou la distance entre le deuxième adaptateur (41, 41') de la broche de positionnement et le couvercle supérieur (2) est supérieure ou égale à la distance entre le premier adaptateur (331) de la première broche et le couvercle supérieur (2).

7. Batterie selon la revendication 2, dans laquelle la deuxième broche comprend une broche de positionnement et une broche conductrice, et dans une projection de la batterie perpendiculaire à la direction allant de la coque inférieure (15) au couvercle supérieur (2), la broche de positionnement est située entre la broche conductrice et la première broche.

8. Batterie selon la revendication 2, dans laquelle
la deuxième feuille de connexion comprend une troisième portion de connexion (43), une quatrième portion de connexion (44) et une portion de transition (45) connectée entre la troisième portion de connexion (43) et la quatrième portion de connexion (44), dans laquelle la troisième portion de connexion (43) est soudée à la coque inférieure (15), une surface supérieure de la quatrième portion de connexion (44) est plus haute qu'une surface supérieure de la troisième portion de connexion (43), et/ou une surface inférieure de la quatrième portion de connexion (44) est plus haute qu'une surface inférieure de la troisième portion de connexion (43) ;
une partie où ladite autre extrémité de la première broche s'étend hors du bord externe du couvercle supérieur (2) est le premier adaptateur (31), et une partie où ladite autre extrémité de la deuxième broche s'étend hors du bord externe de la coque inférieure (15) est le deuxième adaptateur (41, 41') ;
la deuxième broche comprend une broche conductrice et une broche de positionnement, et dans une projection de la coque (1) perpendiculaire à la direction allant de la coque inférieure (15) au couvercle supérieur (2), le deuxième adaptateur (41, 41') de la broche de positionnement est situé entre le premier adaptateur (31) de la première broche et le deuxième adaptateur (41, 41') de la broche conductrice, et un angle inclus (α) entre une première ligne de connexion et une deuxième ligne de connexion est α, où α > 30°, dans laquelle la première ligne de connexion est une ligne droite passant par un point central d'une projection orthographique du couvercle supérieur (2) et bissectant la portion de transition (45), et la deuxième ligne de connexion est une ligne droite passant par le point central de la projection orthographique du couvercle supérieur (2) et bissectant le deuxième adaptateur (41, 41') de la broche de positionnement.

9. Batterie selon la revendication 1 ou 8,
dans laquelle la deuxième broche est agencée sur la quatrième portion de connexion (44) ; et/ou
dans laquelle une deuxième marque de soudure générée par soudage traverse la troisième portion de connexion (43) et s'étend entre 1/3 et 2/3 de l'épaisseur de la coque inférieure (15).

10. Batterie selon la revendication 8, dans laquelle 60° ≤ α ≤ 140 °, ou 100° ≤ α ≤ 125°.

11. Batterie selon la revendication 1, dans laquelle la deuxième couche d'isolation (12) présente une épaisseur de 0,05 mm à 0,1 mm.

12. Batterie selon la revendication 1,
dans laquelle une section transversale de la deuxième feuille de connexion perpendiculaire à la direction de l'épaisseur de la deuxième feuille de connexion présente une forme d'anneau semi-circulaire incomplet comportant une ouverture ; et/ou
dans laquelle le bord externe de la deuxième feuille de connexion est un arc, et cet arc est sensiblement concentrique au bord externe de la coque (1) ; et/ou
dans laquelle la deuxième partie d'adaptateur (4) est située sur un côté de la coque inférieure (15) éloigné de la cavité (6).

13. Batterie selon la revendication 1, comprenant en outre une deuxième feuille d'isolation (7) agencée sur un côté du couvercle supérieur (2) éloigné de la cavité (6),
dans laquelle une projection orthographique de la deuxième feuille d'isolation (7) perpendiculaire à la direction de l'épaisseur du couvercle supérieur (2) recouvre une projection orthographique du couvercle supérieur (2) perpendiculaire à la direction de l'épaisseur du couvercle supérieur (2) ; et/ou
dans laquelle la première languette est une languette d'électrode positive et la deuxième languette est une languette d'électrode négative ; et/ou
dans laquelle la batterie est une pile bouton.
